# EUROPEAN PATENT SPECIFICATION

(11) **EP 2 799 326 B1**
(45) Date of publication and mention of the grant of the patent: **08.06.2016**
(21) Application number: 14164153.0
(22) Date of filing: 10.04.2014
(51) Int. Cl.: B62M 3/08, A43B 5/14

(54) **Spacer for pedaling with increased efficiency**
Abstandhalter für Pedalbewegungen mit erhöhter Effizienz
Écarteur pour pédalage avec une efficacité accrue

(30) Priority: 03.05.2013 IT MI20130171 U
(43) Date of publication of application: 05.11.2014
(73) Proprietor: Skopre S.r.l., 15050 S. Agata Fossili (AL) (IT)
(72) Inventor: Zani, Zeno, 47522 Cesena (FC) (IT)
(74) Representative: Laghi, Alberto

(56) References cited:
- DE-A1- 10 000 416
- DE-U1- 29 817 103
- US-A- 5 860 330

## Description

The present invention is advantageously employed in the practice of cycling on the clean road and / or on unpaved road, at an amateur level or for competition, and relates to a spacer to achieve a pedaling with increased efficiency. Document US 5860330 A1 shows the preamble of claim 1

The purpose of this invention is therefore to improve the efficiency of pedaling of the rider o cyclist, dramatically increasing the thrust vector on the pedal thus allowing a considerable increase of speed in all the conditions of the cycling route.

The structural and functional characteristics of the invention in object and its advantages compared to the known art will be clearer and more evident by the claims bellow, and in particular by an examination of the following description, referring to the accompanying drawings, which show the schematization of some preferred but non-limiting embodiments of a spacer for the practice of cycling in which:
- Figure 1 is a side view of a traditional group bicycle pedal quick release;
- Figure 2 is a side view of a group bicycle pedal quick release on which it is mounted and adapted to act the spacer object of the present invention;
- Figures 3a-3d represent respective perspective views, in plan, side, and front view of a preferred embodiment of the spacer in the object;
- Figures 4a and 4b illustrate two different operating positions of the traditional group pedal bycicle in Figure 1;
- Figures 5a and 5b illustrate two different operating positions of the pedal group of Figure 2, with the spacer in object fixed to the sole of a shoe to the bicycle;
- Figures 6a and 6b illustrate two different operating positions of the pedal group of Figure 2, with the spacer in object integrated in the sole of a shoe to the bicycle; and
- Figure 7 is a perspective view of an alternative embodiment of the spacer in object.

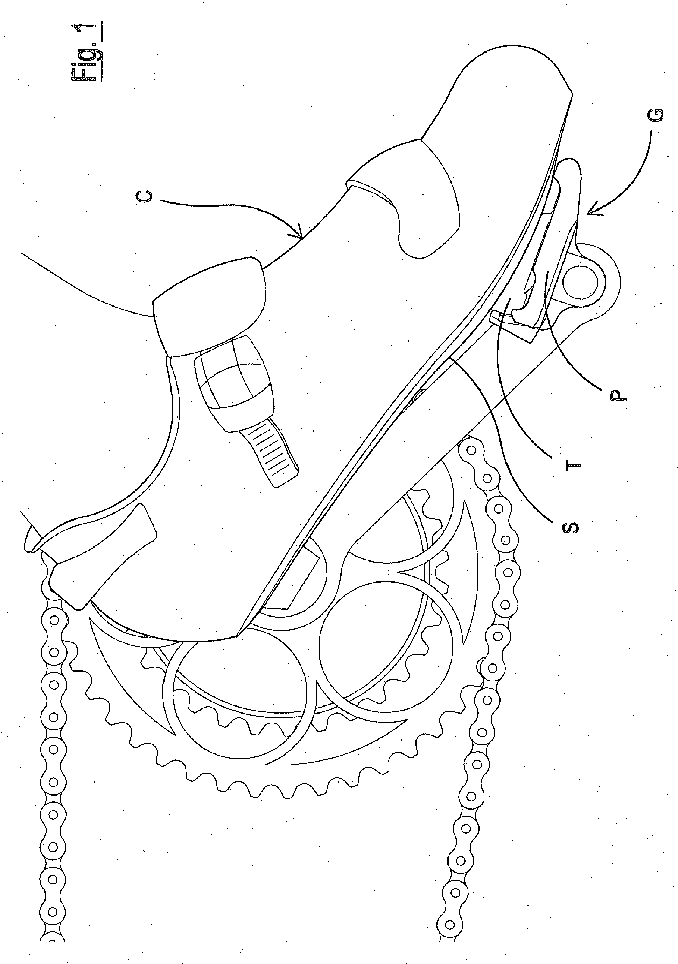

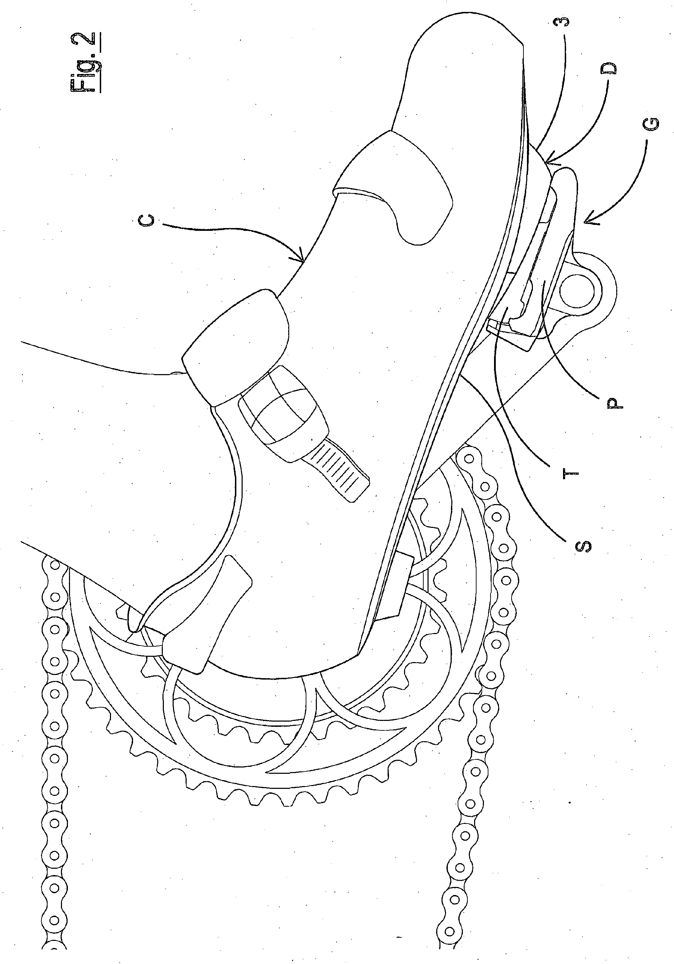

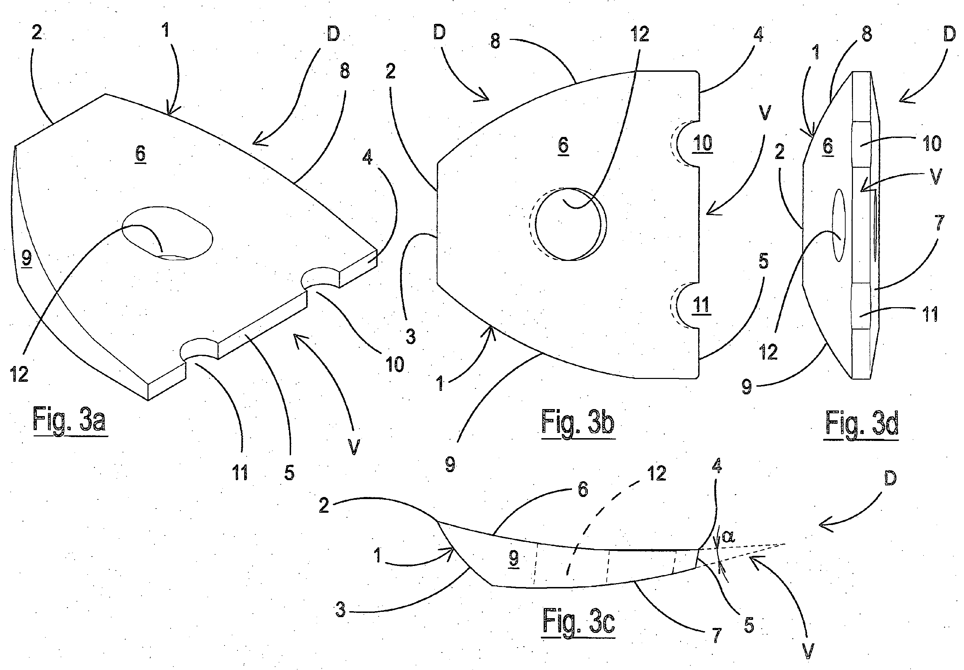

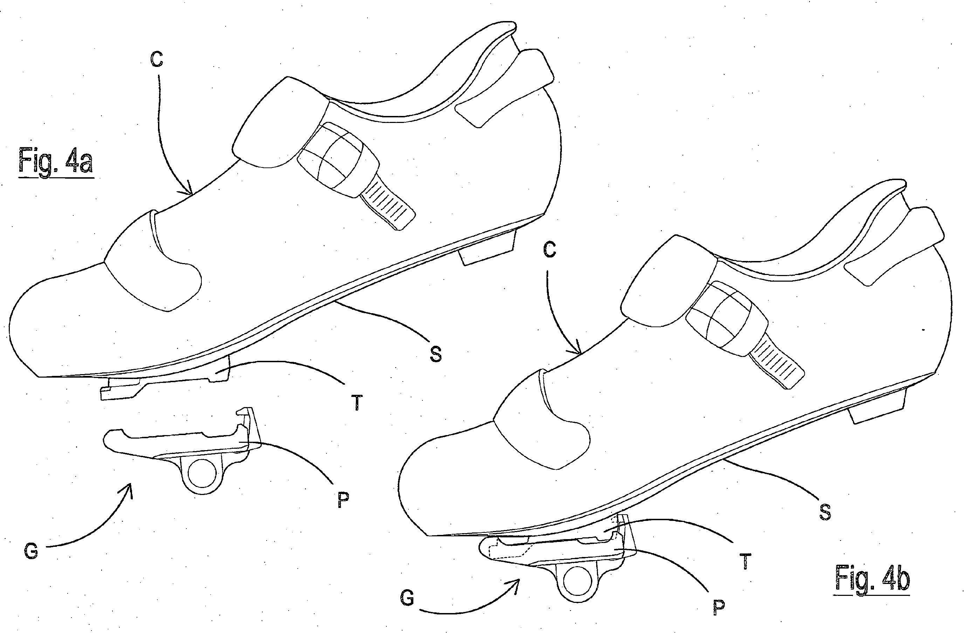

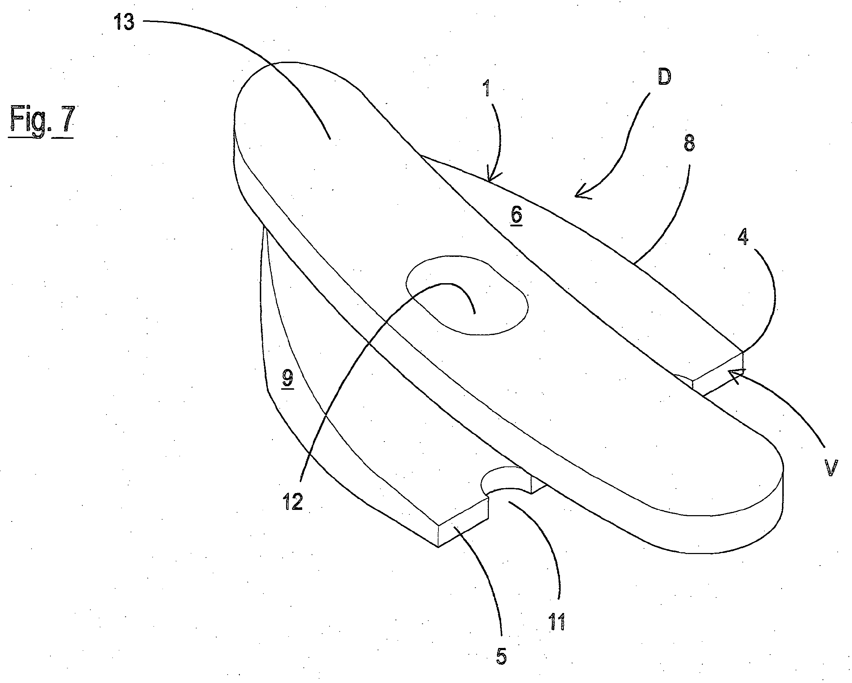

With reference to the embodiment of Figures 2 and 3a to 3d and the alternative embodiment of Figure 7, with D it's globally indicated a spacer for a pedaling with increased efficiency and adapted to be disposed between the outer sole of a shoe S C and a bicycle quick-release type pedal group G, the latter defined, as known, by a quick-release type pedal P and by a coupling element or cleat T attachable to said sole S and adapted to engage with snap or click to the same pedal P (figures 1 and 4a and 4b).

As shown in Figures 3a to 3d, the spacer D is applied to the smooth rigid sole of a road bike shoe C and comprises a substantially wedge-shaped element 1, having an edge apical V facing towards the rear of the shoe C, and substantially defined by:
- an upper front edge 2 which branches extending downward, a front curved surface 3;
- a rear edge 4, coinciding with the aforementioned apical edge V, which branches, extending downwardly, a rear surface 5 with inclined profile;
- a substantially curved upper saddle surface 6 and a lower surface 7 which is also substantially curved saddle type shaped, which top surface 6 and lower 7 surface are connected to each other and bounded by the said front and rear surfaces 3 and 5, and arranged each other substantially inclined at a prefixed angle α (Fig. 3c) that underlies the aforementioned rear edge 4 / apical corner V;
- and two lateral curves surfaces 8 and 9 arranged on the opposite side to said surface 6.

The angle α takes a value within a range between 5° and 15°, preferably having the value equal to 10°.

The aforementioned rear edge 4 is also provided with two passing-by semi-spherical hollows 10 and 11 spaced each other, and a cylindrical through hole 12 is provided centrally between the upper surface 6 and the lower surface 7.

As shown in the alternative form of Figure 7, the spacer D is applied to the sole substantially rigid rubber slip of a shoe C (not shown) for unpaved road cycling or mountain biking MTB, and includes the same wedge-element 1 described above, on the upper surface 6 of which is also fixed a longitudinally disposed a saddle-shaped curve elongated extension 13, provided with the above-mentioned central through hole 12. The cited extension 11 is adapted to be inserted into a corresponding elongated recess provided on the rubber sole in such a way that the appropriate rubber inserts and lug shaped (known and not shown) remain in evidence with respect to the element 1 to allow the support on the ground with a non-slip effect and thus allow the walk by the cyclist.

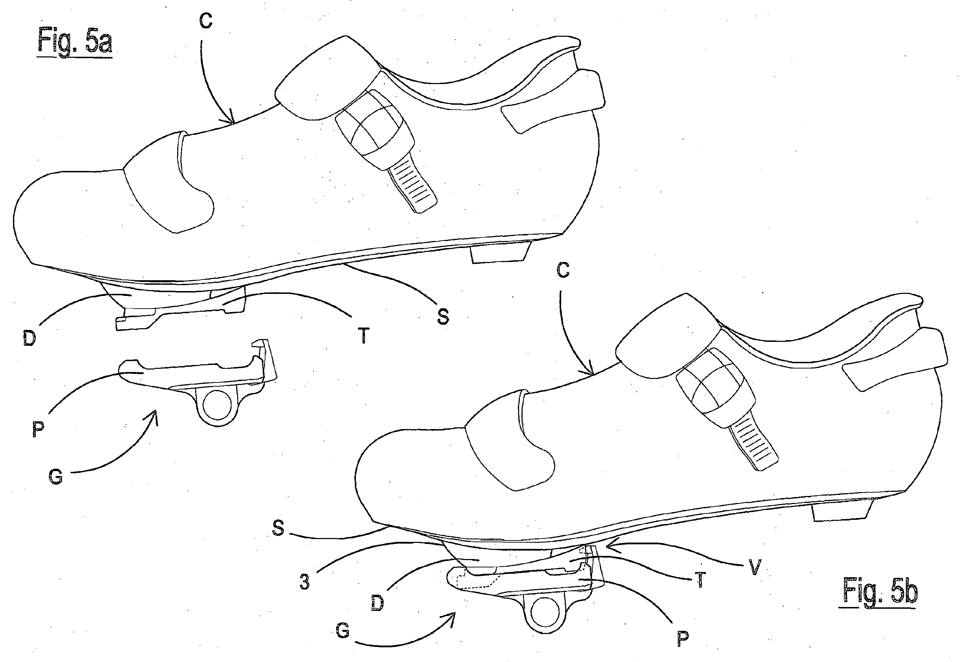

As shown in Figures 2, 5a and 5b, the spacer D described above is adapted to be fixed to the sole S of the shoe C with screws or by gluing or equivalent system.

In particular, the spacer D will be applied substantially at a front portion of the shoe C, and will be disposed between the outsole S and the aforementioned cleat T, the latter being fixed to the sole S via fixing screws (known and not illustrated) through the aforementioned recesses 10 and 11 and the hole 12.

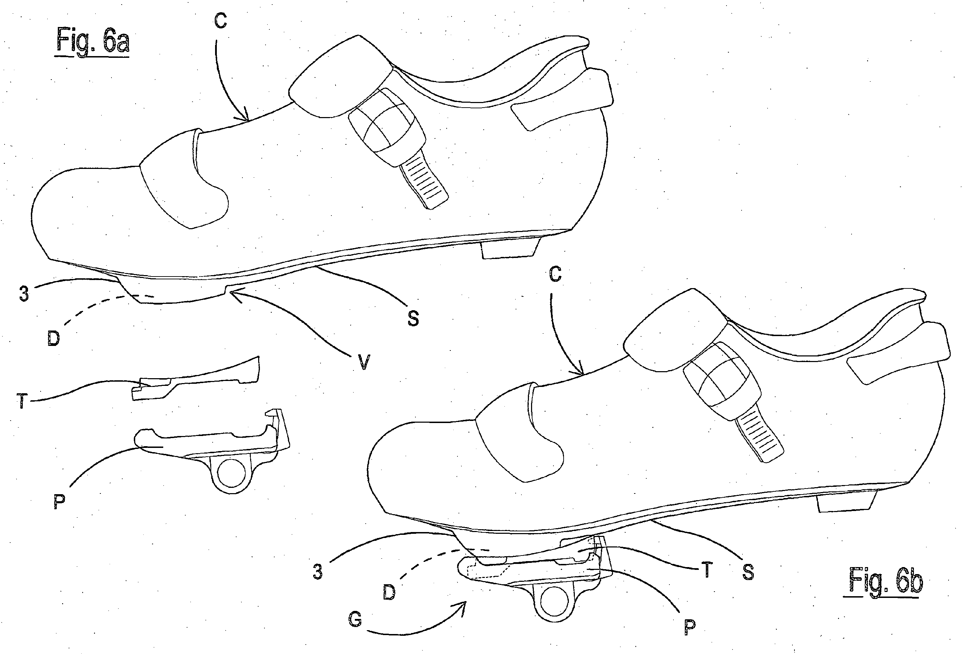

Alternatively, as shown in Figures 6a and 6b, the structure of the sole S is shaped so as to bring the spacer D directly integrated.

According possible alternative variants not shown, the spacer D is fixed directly to the cleat T, in particular on the respective portion or upper face facing said sole S, or the cleat T is shaped so as to lead directly integrated to the spacer D always on the respective upper portion toward said sole S.

## Claims

1. Spacer (D), bicycle shee (c) and quick release pedal group (G) or a pedaling with increased efficiency, comprising an wedge-shaped element (1) adapted to be disposed between the sole (S) of the bicycle shoe (C) and the quick release pedal group (G); **characterized in that** said wedge-shaped element (1) is adapted to allow the increasing of the thrust vector on the pedal and is defined by: an upper front edge (2) which branches, extending downwards, a curved front surface (3); a rear apical edge (V, 4) which branches, extending downwards, a rear inclined surface (5); an upper substantially curved saddle surface (6) and lower substantially curved saddle surface surface (7), said upper (6) and lower surfaces (7) being connected to each other and bounded by said front (3) and rear surfaces (5), and arranged to each other substantially inclined with an fixed angle (α) that underlies said rear edge (4); and two side curves surfaces (8,9) arranged on the opposite side with respect to said upper surface (6); said rear edge (4) being provided with two hemispherical recesses (10,11) spaced each other; a passing-by cylindrical hole (12) being provided centrally between said upper surface (6) and said lower surface (7).

2. Spacer according to claim 1, **characterized in that** said wedge-shaped element (1) is fixed to said sole (S) of said shoe (C).

3. Spacer according to claim 1, **characterized in that** said wedge-shaped element (1) is integrated in the structure of said sole (S) of said shoe (C).

4. Spacer according to claim 1, **characterized in that** said group (G) includes a quick release pedal (P) and a cleat element (T) attachable to said sole (S) of the shoe (C) and adapted to click engage with said pedal (P); said element (1) being disposed between said cleat element (T) and said sole (S) of said shoe (C).

5. Spacer according to claim 4, **characterized in that** said wedge-shaped element (1) is integrated in the structure of said cleat element (T).

6. Spacer according to one or more of claims 1 to 5, **characterized in that** said angle (α) that underlies said rear edge (V, 4) has a value between 5° and 15°.

7. Spacer according to one or more of claims 1 to 6, **characterized in that** said shoe (C) is a shoe for road cycling.

8. Spacer according to one or more of claims 1 to 6, **characterized in that** said shoe (C) is a shoe for unpaved road cycling or mountain biking MTB.

9. Spacer according to claim 8, **characterized in that** said wedge-shaped element (1) is provided with an upper elongated curve and saddle-shaped extension (13) adapted to be inserted into a corresponding recess provided in the sole (S) of said shoe (C); rubber and lug shaped inserts being provided on said sole (S) in evidence with respect to said element (1) to allow the support on the ground with a non-slip effect.

## Patentansprüche

1. Abstandhalter (D), Fahrradschuh (C) und Schnellspannpedalgruppe (G) für eine Pedalbetätigung mit höherer Effizienz, mit einem keilförmigen Element (1), das geeignet ist, zwischen der Sohle (S) des Fahrradschuhs (C) und die Schnellspannpedalgruppe (G) angeordnet zu werden; **dadurch gekennzeichnet, dass** das keilförmiges Element (1) geeignet ist, die Erhöhung des Schubvektors auf das Pedal zu erlauben, und folgendes umfasst: eine obere Vorderkante (2) mit Anhängen, die sich nach unten erstreckt, eine gekrümmte Vorderfläche (3); eine hintere Scheitelkante (V, 4) mit Anhängen, die sich nach unten erstreckt, eine geneigte Rückfläche (5), eine obere im Wesentlichen gekrümmte sattelförmige Fläche (6) und eine untere im Wesentlichen gekrümmte sattelförmige Fläche (7), wobei die besagten oberen (6) und unteren (7) Flächen untereinander und mit den besagten Vorderflächen (3) und Rückflächen (5) verbunden sind, und im wesentlichen schräg relativ zueinander in einem festen Winkel (α) angeordnet sind, der der genannten hinteren Kante (4) zugrunde liegt; und zwei seitliche gebogene Flächen (8, 9), die auf der gegenüberliegenden Seite in Bezug auf die besagte obere Fläche (6) angeordnet sind ; wobei die besagte hintere Kante (4) mit zwei halbkugeligen Hohlräumen (10, 11) versehen ist, die einander beabstandet sind; ein zylindrisches Durchgangsloch (12), das zentral zwischen der besagten Oberseite (6) und Unterseite (7) angeordnet ist.

2. Abstandhalter nach Anspruch 1, **dadurch gekennzeichnet, dass** das besagte keilförmige Element (1) mit der besagten Sohle (S) des besagten Schuhs (C) fest verbunden ist.

3. Abstandhalter nach Anspruch 1, **dadurch gekennzeichnet, dass** das besagte keilförmige Element (1) in der Struktur der besagten Sohle (S) des besagten Schuhs (C) integriert ist.

4. Abstandhalter nach Anspruch 1, **dadurch gekennzeichnet, dass** die besagte Gruppe (G) eine schnell freisetzende Pedalgruppe (P) und ein Absatzelement (T) umfasst, das mit der besagten Sohle (S) des Schuhs (C) verbunden und angepasst ist, mit dem besagten Pedal (P) einzugreifen; wobei das besagte Element (1) zwischen dem besagten Absatzelement (T) und der besagten Sohle (C) des besagten Schuhs (C) angeordnet ist.

5. Abstandhalter nach Anspruch 4, **dadurch gekennzeichnet, dass** das besagte keilförmige Element (1) in der Struktur des besagten Absatzelements (T) integriert ist.

6. Abstandhalter nach einem oder mehreren der Ansprüche 1 bis 5, **dadurch gekennzeichnet, dass** der besagte Winkel (α) der zu dieser hinteren Kante (V, 4) zugrunde liegt, einen Wert zwischen 5° und 15° aufweist.

7. Abstandhalter nach einem oder mehreren der Ansprüche 1 bis 6, **dadurch gekennzeichnet, dass** der besagte Schuh (C) ein Fahrradschuh auf Straße.

8. Abstandhalter nach einem oder mehreren der Ansprüche 1 bis 6, **dadurch gekennzeichnet, dass** der besagte Schuh (C) ein Fahrradschuh auf unbefestigter Straße oder als Mountainbike MTB, ist.

9. Abstandhalter nach Anspruch 8, **dadurch gekennzeichnet, dass** das besagte keilförmige Element (1) mit einer oberen langgestreckten Kurve und einer sattelförmigen Verlängerung (13) versehen ist, die geeignet sind, in einen entsprechenden Hohlraum eingeführt zu werden, der in der Sohle (S) des besagten Schuhs (C) geformt ist; wobei Gummi-und nasenförmige Einlagen auf der besagten Sohle (S), sichtbar mit Bezug auf dem besagten Elements (1), vorgesehen sind, um seine Abstützung auf dem Boden ohne Slip-Effekt zu ermöglichen.

## Revendications

1. Entretoise (D), chaussure de bicyclette (C) et groupe de pédales (G) à dégagement rapide pour un actionnement des pédales avec une plus grande efficacité, comprenant un élément (1) en forme de coin, adapté pour être disposé entre la semelle (S) de la chaussure de bicyclette (C) et le groupe des pédales (G) à dégagement rapide, **caractérisé en ce que** l'élément (1) en forme de coin est adapté pour permettre l'augmentation du vecteur de poussée sur la pédale et est défini par: un bord avant supérieur (2) avec des branchements, développé vers le bas, une surface avant courbe (3); un bord arrière apical (V, 4) avec des branchements, développé vers le bas, une surface arrière (5) inclinée, une surface supérieure (6) d'une selle sensiblement incurvée et une surface inférieure (7) de selle sensiblement incurvée, lesdites surfaces supérieure (6) et inférieure (7) étant reliées entre elles et reliées au moyen desdites surfaces avant (3) et arrière (5) et étant disposées sensiblement inclinées par rapport à un angle fixe (α) qui est sous-tendu par ledit bord arrière (4) ; et deux surfaces latérales (8, 9) incurvées disposées sur le côté opposé par rapport à ladite surface supérieure (6); ledit bord arrière (4) étant muni de deux cavités (10, 11) hémisphériques espacées les unes des autres; un trou traversant cylindrique (12) étant formé centralement entre ladite surface supérieure (6) et ladite surface inférieure (7).

2. Entretoise selon la revendication 1, **caractérisé en ce que** ledit élément (1) une forme de coin est fixé à ladite semelle (S) de ladite chaussure (C).

3. Entretoise selon dans la revendication 1, **caractérisé en ce que** ledit élément (1) en forme de coin est intégré dans la structure de ladite semelle (S) de ladite chaussure (C).

4. Entretoise selon la revendication 1, **caractérisé en ce que** ledit groupe (G) comprend un groupe de pédales (P) à dégagement rapide et un élément de taquet (T) applicable à ladite semelle (S) de la chaussure (C) et adapté pour une encliquetage en prise avec ledit pédale (P); ledit élément (1) étant disposé entre ledit élément de taquet (T) et ladite semelle (S) de ladite chaussure (C).

5. Entretoise selon la revendication 4, **caractérisé en ce que** ledit élément (1) en forme de coin est intégré dans la structure dudit élément de taquet (T).

6. Entretoise selon l'une ou plusieurs des revendications 1 à 5, **caractérisé en ce que** ledit angle (α) qui est sous-tendu par ledit bord arrière (V, 4) a une valeur comprise entre 5° et 15°.

7. Entretoise selon l'une ou plusieurs des revendications 1 à 6, **caractérisé en ce que** ladite chaussure (C) est une chaussure de cyclisme sur route.

8. Entretoise selon l'une ou plusieurs des revendications 1 à 6, **caractérisé en ce que** ladite chaussure (C) est une chaussure de cyclisme sur route non pavée ou mountain bike VTT.

9. Entretoise selon la revendication 8, **caractérisé en ce que** ledit élément (1) en forme de coin est muni d'une courbe supérieure de forme allongée et d'un prolongement (13) en forme de selle, apte à être inséré dans une cavité correspondante formée dans la semelle (S) de ladite chaussure (C); des inserts en forme de caoutchouc ou de volets étant formés sur ladite semelle (S) en preuve à l'égard de l'élément (1) pour permettre le soutien sur le terrain sans un effet de glissement.
